# EUROPÄISCHE PATENTSCHRIFT

(11) **EP 0 733 845 B1**
(45) Veröffentlichungstag und Bekanntmachung des Hinweises auf die Patenterteilung: **22.08.2001**
(21) Anmeldenummer: 96104363.5
(22) Anmeldetag: 19.03.1996
(51) Int. Cl.: F16L 37/092, F16L 37/12

(54) **Anschlussvorrichtung zum Anschluss von Rohrleitungen an ein Aggregateteil**
Connecting device for the connection of pipes to a unit
Dispositif de connexion pour la connexion de tuyaux à un agrégat

(30) Priorität: 21.03.1995 DE 19510192
(43) Veröffentlichungstag der Anmeldung: 25.09.1996
(73) Patentinhaber: Armaturenfabrik Hermann Voss GmbH + Co. KG, 51688 Wipperfürth (DE)
(72) Erfinder: Brandt, Josef, 51688 Wipperfürth (DE)
(74) Vertreter: Patentanwälte Dr. Solf & Zapf

(56) Entgegenhaltungen:
- DE-A- 3 011 430
- DE-A- 3 105 917
- DE-C- 4 007 101
- GB-A- 2 073 350
- GB-A- 2 165 604

## Beschreibung

Die vorliegende Erfindung betrifft eine Anschlußvorrichtung zum Anschluß mindestens einer Kunststoff-Rohrleitung an ein Aggregateteil, bestehend aus einem mit dem Aggregateteil verbindbaren Gehäuseteil mit mindestens einer Aufnahmeöffnung zum Einstecken der Rohrleitung und einem in der Aufnahmeöffnung angeordneten Halteelement zum Arretieren der eingesteckten Rohrleitung,in dem Gehäuseteil.
Eine solche Anschlußvorrichtung ist aus der DE-A-3011430 bekannt.

In der DE-OS 30 11 430 sind verschiedenartige Ausführungen einer Steckarmatur zum Anschluß einer Kunststoff-Rohrleitung an ein z.B. als Ventilkörper ausgebildetes Aggregateteil beschrieben. Dabei ist in einigen Ausführungen ein als Einschraubstück bzw. Überwurfschraube ausgebildetes Gehäuseeteil in ein Innengewinde des Aggregateteils eingeschraubt, wobei in einer zwischen dem Einschraubstück und dem Aggregateteil gebildeten Ringkammer ein als Klemmring ausgebildetes Halteelement zum Arretieren der Rohrleitung angeordnet ist. In weiteren Ausführungsformen ist das die Rohrleitung und das Halteelement aufnehmende Gehäuseteil zweiteilig aus einem Gewindestutzen und einer Überwurfmutter ausgebildet, wobei der Gewindestutzen mit einem ein Außengewinde aufweisenden Verbindungsansatz in ein Innengewinde des Aggregateteils eingeschraubt wird. Diese bekannten Ausführungsformen sind somit - insbesondere bedingt durch die Gewindeverbindungen - herstellungsmäßig recht aufwendig und in der Handhabung recht umständlich.

Die DE-C-4007101 offenbart eine Anschlußvorrichtung, bei der das Rohr erst dann arretiert ist, wenn sich die Spannzange in ihrem eingesetzten Zustand innerhalb des Aggregateteils befindet, weil die Klemmelemente mit Betötigungsflächen innerhalb des Aggregateteils so zusammen wirken, daß eine elastische Verformung radial nach innen bewirkt wird und die Leitung durch zahnartige Vorsprünge gehalten wird.

Der vorliegenden Erfindung liegt die Aufgabe zugrunde, eine Anschlußvorrichtung der gattungsgemäßen Art zu schaffen, die sich durch besonders einfache Handhabung insbesondere in bezug auf die Verbindung mit dem Aggregateteil bei gleichzeitig einfacher und preiswerter Herstellbarkeit auszeichnet.

Erfindungsgemäß wird dies durch die Merkmale von Anspruch 1 erreicht.

Somit braucht zum Anschluß an das Aggregateteil lediglich das Gehäuseteil mit seinem Einsteckabschnitt in die Stecköffnung des Aggregateteils eingesteckt zu werden, bis die erfindungsgemäße Rastverbindung einrastet und so eine sichere, formschlüssige Halterung bewirkt. Diese erfindungsgemäße Rastverbindung ist dabei vorteilhafterweise auch sehr sicher gegen ungewolltes, z.B. druckbedingtes Lösen, indem sie nach dem Einstecken der Rohrleitung durch diese selbsttätig gegen ein Entriegeln der Rastmittel gesichert ist. Die Einzelteile der erfindungsgemäßen Anschlußvorrichtung sind hierbei sehr einfach und preiswert insbesondere als Kunststoff-Formteile herstellbar.

Weitere vorteilhafte Ausgestaltungmerkmale der Erfindung sind in den Unteransprüchen sowie der folgenden Beschreibung enthalten.

Anhand der Zeichnung soll nun die Erfindung beispielhaft näher erläutert werden. Dabei zeigen:
- Fig. 1: einen Axialschnitt - bezogen auf die Steckachse - durch eine bevorzugte Ausführungsform einer Anschlußvorrichtung mit zusätzlicher Darstellung einer Rohrleitung vor dem Einstecken,
- Fig. 2: eine Ansicht analog zu Fig. 1 mit eingesteckter und arretierter Rohrleitung,
- Fig. 2a: eine vergrößerte Detaildarstellung des Bereichs X in Fig. 2 in einer vorteilhaften Ausgestaltung der erfindungsgemäßen Rastverbindung,
- Fig. 3: eine Schnittansicht in der Schnittebene III-III gemäß Fig. 1 eines Basisteils der Anschlußvorrichtung (ohne Innenteile),
- Fig. 4: eine Schnittansicht in der Schnittebene wie in Fig. 1 eines mit dem Basisteil nach Fig. 3 verbindbaren Einsatzteils der Anschlußvorrichtung,
- Fig. 5: eine Draufsicht des Einsatzteils in Pfeilrichtung V gemäß Fig. 4,
- Fig. 6: einen Axialschnitt der Anschlußvorrichtung analog zu Fig. 1, jedoch in einer erfindungsgemäßen Ausführung mit zusätzlicher Darstellung eines Aggregateteils vor Verbindung,
- Fig. 7: eine Ansicht analog zu Fig. 6 im mit dem Aggregateteil verbundenen Zustand der erfindungsgemäßen Anschlußvorrichtung, jedoch vor Einstecken einer Rohrleitung und
- Fig. 8: eine Ansicht analog zu Fig. 7, wobei die Rohrleitung eingesteckt und arretiert ist.

In den verschiedenen Figuren der Zeichnung sind gleiche Teile stets mit den gleichen Bezugszeichen versehen.

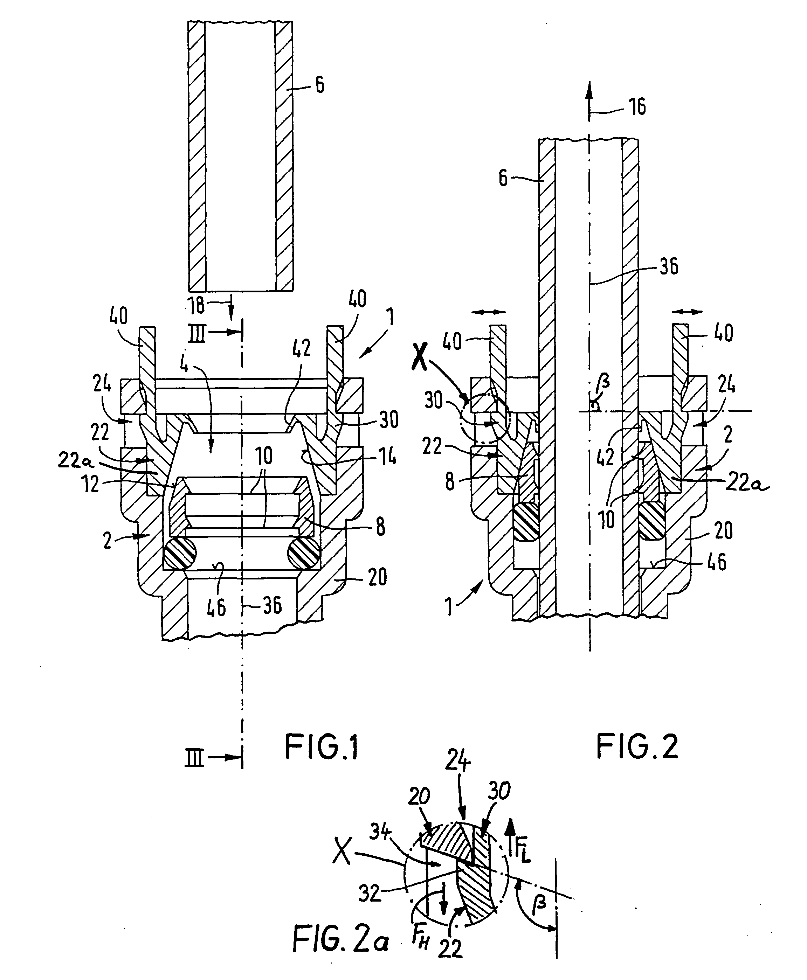

Wie sich zunächst aus Fig. 1 und 2 ergibt, besteht eine Anschlußvorrichtung 1 aus einem Gehäuseteilmit einer einseitig offenen Aufnahmeöffnung 4 zum axialen Einstecken eines Endes einer Rohrleitung 6 sowie aus einem in dem Gehäuseteil 2 bzw. in der Aufnahmeöffnung 4 angeordneten Klemmring 8 zum Arretieren der axial eingesteckten Rohrleitung 6. Dabei ermöglicht die Anschlußvorrichtung 1 eine Montage der Rohrleitung 6 durch einfaches Einstecken in das Gehäuseteil 2 ohne sonstige Montageschritte, denn die Anschlußvorrichtung 1 mit Gehäuseteil 2 und Klemmring 8 ist vorher bereits fertig montiert. Der Klemmring 8 sitzt derart in einer Erweiterung der Aufnahmeöffnung 4, daß er letztere - und damit auch die eingesteckte Rohrleitung 6 - umschließt. Der Klemmring 8 weist an einer Stelle seines Umfanges einen axial und radial durchgehenden Längs- bzw. Radialschlitz, d.h. eine Unterbrechung in seinem Umfangsverlauf, auf, wodurch er radialelastisch aufgeweitet und verengt werden kann. In seinem inneren Umfangsbereich besitzt der Klemmring 8 mindestens eine radial nach innen ragende, umlaufende Schneidkante 10; im dargestellten Ausführungsbeispiel sind jedoch zwei axial beabstandete Schneidkanten 10 vorgesehen. Der Klemmring 8 besitzt ferner einen Außenkonus 12, der zum Arretieren der Rohrleitung mit einem Innenkonus 14 des Gehäuseteils 2 derart zusammenwirkt, daß bei einem Zug in Löserichtung (Pfeilrichtung 16 in Fig. 2) an der Rohrleitung 6, d.h. bei einer Bewegung entgegen der Einsteckrichtung (Pfeil 18 in Fig. 1), der Klemmring 8 durch kraftschlüssige Anlage seiner Schneidkanten 10 mitgenommen wird, bis sein Außenkonus 12 zur Anlage an den Innenkonus 14 des Gehäuseteils 2 gelangt. Bei weitergehendem Zug wird über die Konen 12,14 eine radial nach innen gerichtete Kraft erzeugt, durch die der Klemmring 8 -in an sich bekannter Weise - elastisch verengt wird, so daß die Schneidkanten 10 kraft- und/oder formschlüssig mit dem im wesentlichen glattflächigen, zylindrischen Rohr-Außenumfang zusammenwirken und so das Rohr gegen Herausziehen arretiert wird.

Um die Möglichkeit einer nachfolgenden Lösbarkeit der Rohrleitung 6 zu schaffen, besteht das Gehäuseteil 2 aus zwei lösbar miteinander verbundenen Teilen, und zwar aus einem Basisteil 20 und einem Einsatzteil 22. Hierbei weist das Einsatzteil 22 im Bereich eines in Umfangsrichtung geschlossenen, d.h. ungeschlitzten Ringteils 22a den Innenkonus 14 auf, so daß nach Lösen des Einsatzteils 22 vom Basisteil 20 die Rohrleitung 6 gemeinsam mit dem Klemmring 8 und dem Einsatzteil 22 entnommen werden kann. Durch seine ungeschlitzte Umfangskontur ist der Ringteil 22a hinreichend "formstabil", um die beim Verengen des Klemmrings 8 über die Konusflächen aufretenden Radialkräfte aufnehmen zu können.

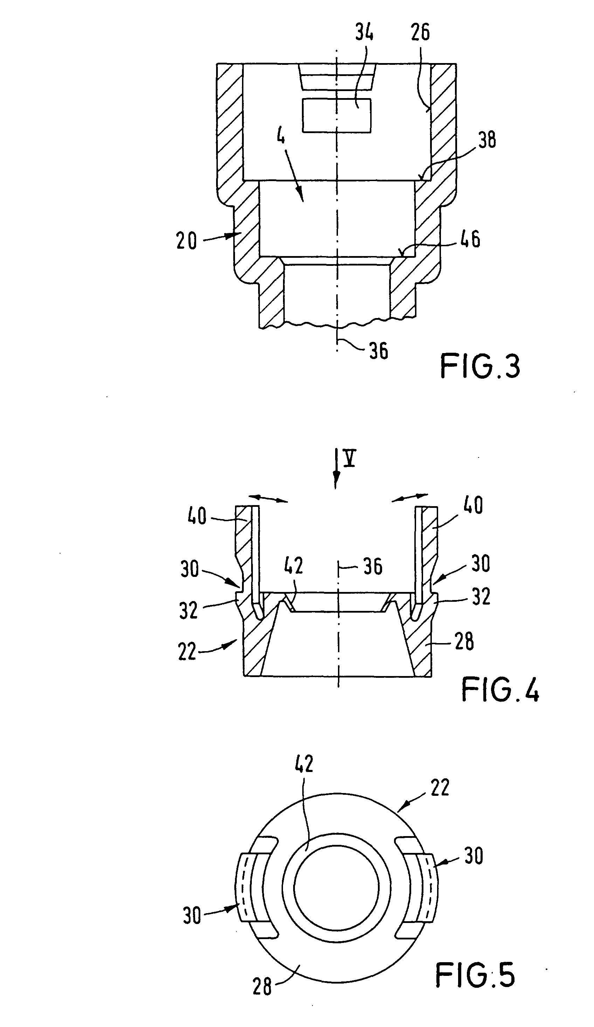

Vorzugsweise ist das Einsatzteil 22 über eine schnappbare Formschlußverbindung 24 mit dem Basisteil 20 lösbar verbunden, d.h. verrastet bzw. verklipst. Hierzu besteht das Einsatzteil 22 bevorzugt aus einem den ungeschlitzten Ringteil 22a bildenden, zumindest bereichsweise in eine Erweiterung 26 der Aufnahmeöffnung 4 (vgl. hierzu Fig. 3) des Basisteils 20 einsetzbaren, den Innenkonus 14 aufweisenden Zentrierring 28 und mindestens zwei insbesondere gleichmäßig über den Umfang verteilt angeordneten, federelastischen Rastarmen 30 (vgl. Fig. 4 und 5). Hierbei greift jeder Rastarm 30 mit einem Rastnocken 32 in Richtung radial nach außen in eine Rastöffnung 34 des Basisteils 20 ein, und zwar - um einen "echten" Formschluß zu erreichen - mit einem Wirkflächen-Hinterschneidungswinkel β ≥ 90° (vgl.Fig. 2 und 2a). Die Rastarme 30 erstrecken sich hierbei im wesentlichen axial, d.h. etwa parallel zur Steckachse 36. Im dargestellten Ausführungsbeispiel sind zwei Rastarme 30 vorgesehen, die aufgrund der über den Umfang gleichmäßigen, radialsymmetrischen Verteilung diametral gegenüberliegend angeordnet sind. Der ungeschlitzte Zentrierring 28 ist vorzugsweise auf einer Ringstufe 38 (s. Fig. 3) innerhalb des Basisteils 20 abgestützt. Das Einsatzteil 22 ist bevorzugt als einstückiges Formteil aus Kunststoff hergestellt. Entsprechendes gilt vorzugsweise auch für das Basisteil 20.

Wie sich zudem aus Fig. 1 und 2 ergibt, weist jeder Rastarm 30 zweckmäßigerweise einen im wesentlichen axial, d.h. parallel zur Steckachse 36 aus dem Basisteil 20 ragenden Betätigungsabschnitt 40 auf. Die Betätigungsabschnitte 40 sind somit von außen zugänglich zum manuellen Betätigen der Rastarme 30. Hierzu werden die Betätigungsabschnitte 40 radial nach innen aufeinanderzu bzw. in Richtung der Rohrleitung 6 bewegt, bis die Rastnocken 32 aus den Rastöffnungen 34 gelangen und so der Formschluß aufgehoben wird. Es kann dann die Rohrleitung 6 zusammen mit dem Einsatzteil 22 und dem Klemmring 8 entnommen werden.

Gemäß Fig. 2a ist es besonders vorteilhaft, wenn die Rastverbindung 24 mit einem Hinterschneidungswinkel β > 90° ausgebildet ist. Hierdurch wird erreicht, daß bei Auftreten bzw. bei Anstieg einer in Löserichtung (Pfeil 16 in Fig. 2) wirkenden Kraft F_{L} auch die Haltekraft F_{H} entsprechend zunimmt. Dies führt zu einer hohen Sicherheit gegen ungewolltes Lösen der Rohrleitung 6.

In einer besonders vorteilhaften Ausgestaltung der Erfindung weist das Einsatzteil 22 eine innere umlaufende Dichtlippe 42 zur dichtenden Anlage auf der Außenumfangsfläche der Rohrleitung 6 auf. Vor dem Einstecken der Rohrleitung 6 erstreckt sich diese flexible, elastische Dichtlippe 42 gemäß Fig. 1 in Einsteckrichtung schräg nach innen und wird dann durch die eingesteckte Rohrleitung 6 gemäß Fig. 2 etwas nach außen aufgeweitet, so daß sie dichtend anliegt. Die Dichtlippe 42 dient zur Abdichtung insbesondere gegen Staub, Schmutz und Feuchtigkeit (Spritzwasser). Dabei ist die Dichtlippe 42 ebenfalls einstückig als dünner, lamellenartiger Ringsteg angeformt.

Wie sich weiterhin aus Fig. 1 und 2 ergibt, ist ein Dichtring 44 zur druckdichten Abdichtung bevorzugt auf der dem Einsatzteil 22 abgekehrten Seite des Klemmringes 8 zwischen letzterem und einer Ringstufe 46 des Basisteils 20 (vgl. Fig. 3) derart angeordnet, daß die eingesteckte Rohrleitung 6 bei einer Bewegung in Löserichtung 16 (Fig. 2) über den Dichtring 44 den Klemmring 8 mitnimmt und so vorteilhafterweise zur Erhöhung der radial nach innen gerichteten Klemmkraft gegen den Innenkonus 14 bewegt.

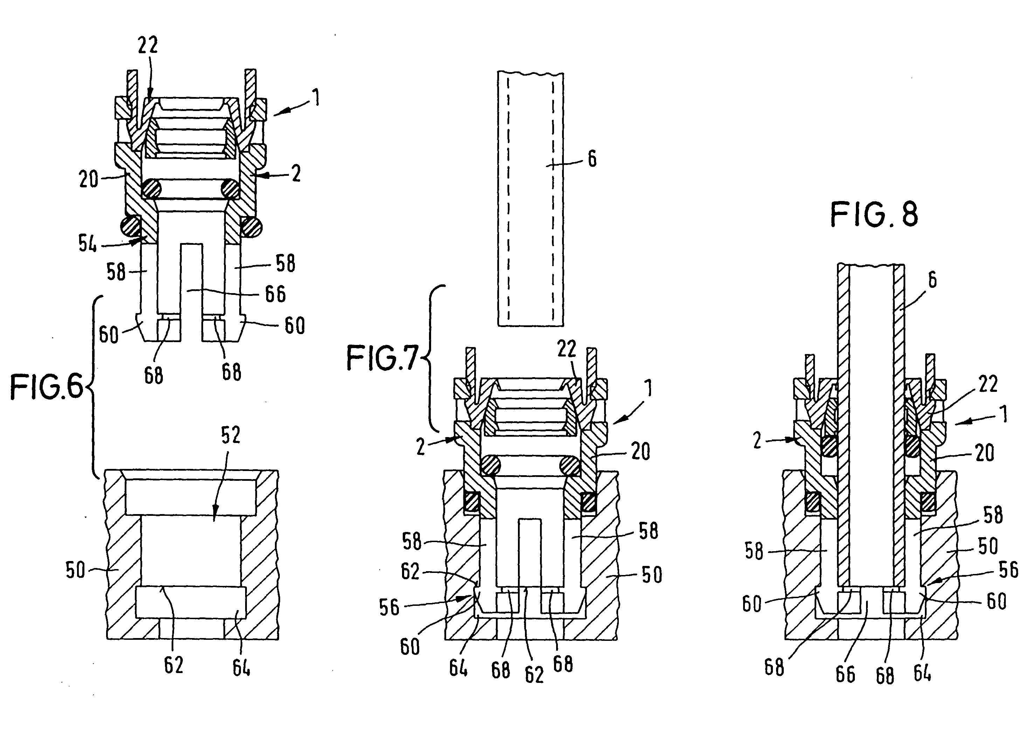

Gemäß Fig. 6 bis 8 ist erfindungsgemäß die Anschlußvorrichtung 1 bzw. das Gehäuseteil 2 mit einem beliebigen Aggregateteil 50 verbindbar. Hierzu weist das Gehäuseteil 2 einen dichtend in eine Stecköffnung 52 des Aggregateteils 50 einsteckbaren Einsteckabschnitt 54 auf, wobei dieser Einsteckabschnitt 54 in der Stecköffnung 52 erfindungsgemäß über eine schnappbare Formschlußverbindung 56 gehalten wird. Die schnappbare Formschlußverbindung 56 ist dabei durch die eingesteckte Rohrleitung 6 gegen Lösen arretierbar.

Im dargestellten Ausführungbeispiel wird dies dadurch erreicht, daß der Einsteckabschnitt 54 mindestens einen Rastarm aufweist. Vorzugsweise sind aber mindestens zwei - wie dargestellt vier - insbesondere gleichmäßig über den Umfang verteilt (radialsymmetrisch) angeordnete und sich im wesentlichen axial, parallel zur Steckachse 36 erstreckende, in radialer Richtung federelastische Rastarme 58 vorgesehen. Jeder Rastarm 58 hintergreift mit mindestens einem Rastnocken 60 eine Stufenfläche 62 des Aggregateteils 50 formschlüssig. Hierbei kann eventuell auch eine Ausgestaltung analog zu Fig. 2a vorgesehen sein. Die Rohrleitung 6 ist hierbei vorteilhafterweise durch die Aufnahmeöffnung 4 hindurch derart bis in den Rastarm-Bereich einsteckbar, daß durch Anlage der Rastarme 58 an der Rohrleitung 6 eine radiale Lösebewegung der Rastarme 58 ausgeschlossen ist. Dieser Zustand ist in Fig.8 dargestellt. Die zur Erzeugung eines Formschlusses mit den Rastnocken 60 zusammenwirkende Stufenfläche 62 ist bevorzugt durch eine ringnutartige Erweiterung 64 der Stecköffnung 52 gebildet. Die vorzugsweise vier Rastarme 58 des Einsteckabschnittes 54 sind jeweils durch axiale Schlitze 66 gebildet bzw. voneinander getrennt.

Bei dieser erfindungsgemäßen Ausführungsform nach Fig. 6 bis 8 weisen die Rastarme 58 in ihrem freien Endbereich radial nach innen ragende Auflagestege 68 als Einsteckbegrenzung für die Rohrleitung auf. Diese Funktion ist in Fig. 8 gut zu erkennen.

## Patentansprüche

1. Anschlußvorrichtung (1) zum Anschluß mindestens einer Kunststoff-Rohrleitung (6) an ein Aggregateteil (50), bestehend aus einem mit dem Aggregateteil (50) verbindbaren Gehäuseteil (2) mit mindestens einer Aufnahmeöffnung (4) zum Einstecken der Rohrleitung (6) und einem in der Aufnahmeöffnung (4) des Gehäuseteils (2) angeordneten Halteelement (8) zum Arretieren der eingesteckten Rohrleitung (6) in dem Gehäuseteil (2),
**dadurch gekennzeichnet**, **dass** das Gehäuseteil (2) einen dichtend in eine Stecköffnung (52) des Aggregateteils (50) einsteckbaren Einsteckabschnitt (54) aufweist, wobei der Einsteckabschnitt (54) in der Stecköffnung (52) über eine schnappbare Formschlußverbindung (56) gehalten wird und die schnappbare Formschlußverbindung (56) durch die in das Gehäuseteil (2) eingesteckte Rohrleitung (6). gegen Lösen arretierbar ist, und wobei das Gehäuseteil (2) zwecks Lösbarkeit der Rohrleitung (6) derart zweiteilig aus einem Basisteil (20) und einem mit diesem lösbar verbundenen Einsatzteil (22) besteht, daß nach Lösen des Einsatzteils (22) von dem Basisteil (20) die Rohrleitung (6) zusammen mit dem Halteelement (8) aus dem Gehäuseteil (2) entnommen werden kann.

2. Anschlußvorrichtung nach Anspruch 1,
**dadurch gekennzeichnet**, **dass** der Einsteckabschnitt (54) mindestens einen, vorzugsweise mindestens zwei insbesondere gleichmäßig über den Umfang verteilt angeordnete, sich im wesentlichen axial, parallel zur Steckachse (36) erstreckende, in radialer Richtung federelastische Rastarme (58) aufweist, wobei der bzw. jeder Rastarm (58) mit mindestens einem Rastnocken (60) eine Stufenfläche (62) des Aggregateteils (50) formschlüssig hintergreift, wobei die Rohrleitung (6) durch die Aufnahmeöffnung (4) hindurch derart in den Rastarm-Bereich einsteckbar ist, daß durch Anlage der/des Rastarme/s (58) an der Rohrleitung (6) eine radiale Lösebewegung der/des Rastarme/s (58) ausgeschlossen ist.

3. Anschlußvorrichtung nach Anspruch 2,
**dadurch gekennzeichnet**, **dass** der Einsteckabschnitt (54) vier Rastarme (58) aufweist, zwischen denen jeweils axiale Schlitze (66) gebildet sind.

4. Anschlußvorrichtung nach Anspruch 2 oder 3,
**dadurch gekennzeichnet**, **dass** die Rastarme (58) in ihrem freien Endbereich innere Auflagestege (68) als Einsteckbegrenzung für die Rohrleitung (6) aufweisen.

5. Anschlußvorrichtung nach einem der Ansprüche 1 bis 4,
**dadurch gekennzeichnet**, **dass** das Einsatzteil (22) über eine schnappbare Formschlußverbindung (24) mit dem Basisteil (20) verbunden ist.

6. Anschlußvorrichtung nach einem der Ansprüche 1 bis 5,
**dadurch gekennzeichnet**, **dass** das Einsatzteil aus einem in eine Erweiterung (26) der Aufnahmeöffnung (4) des Basisteils (20) einsetzbaren, vorzugsweise einen Innenkonus (14) aufweisenden Zentrierring (28) und mindestens zwei insbesondere gleichmäßig über den Umfang verteilt angeordneten, federelastischen Rastarmen (30) besteht, wobei jeder Rastarm (30) mit einem Rastnocken (32) in eine Rastöffnung (34) des Basisteils (20) eingreift.

7. Anschlußvorrichtung nach Anspruch 6,
**dadurch gekennzeichnet**, **dass** jeder Rastarm (30) einen aus dem Basisteil (20) ragenden Betätigungsabschnitt (40) aufweist.

8. Anschlußvorrichtung nach einem der Ansprüche 1 bis 7,
**dadurch gekennzeichnet**, **dass** das Einsatzteil (22) eine innere, umlaufende Dichtlippe (42) zur dichtenden Anlage auf der Außenumfangsfläche der Rohrleitung (6) aufweist.

9. Anschlußvorrichtung nach einem der Ansprüche 1 bis 8,
**dadurch gekennzeichnet**, **dass** auf der dem Einsatzteil (22) abgekehrten Seite des - vorzugsweise als geschlitzter, radialelastischer, über einen Außenkonus (12) mit dem Innenkonus (14) des Gehäuseteils (2) zusammenwirkender Klemmring (8) ausgebildeten - Halteelementes zwischen diesem und einer Ringstufe (46) des Basisteils (20) ein Dichtring (44) derart angeordnet ist, daß die eingesteckte Rohrleitung (6) bei einer Bewegung in Löserichtung (16) über den Dichtring (44) den Klemmring (8) mitnimmt und zur Erhöhung der radialen Klemmkraft gegen den Innenkonus (14) bewegt.

## Claims

1. Connecting device (1) for connecting at least one plastic pipe line (6) to a part (50) of a unit, consisting of a housing part (2), which can be connected to the part (50) of the unit and has at least one locating opening (4) for pushing in the pipe line (6), and of a retaining element (8) which is arranged in the locating opening (4) of the housing part (2) and is intended for locking the pushed-in pipe line (6) in the housing part (2), characterized in that the housing part (2) has a push-in section (54) which can be pushed in a sealing manner into a socket opening (52) of the part (50) of the unit, in which arrangement the push-in section (54) is held in the socket opening (52) via a snap-action positive-locking connection (56), and the snap-action positive-locking connection (56) can be locked against release by the pipe line (6) pushed into the housing part (2), and the housing part (2), for ease of release of the pipe line (6), consists of two parts, comprising a base part (20) and an insert part (22) releasably connected to the base part, in such a way that, after the release of the insert part (22) from the base part (20), the pipe line (6) can be removed from the housing part (2) together with the retaining element (8).

2. Connecting device according to Claim 1, characterized in that the push-in section (54) has at least one, preferably at least two, latching arms (58) which in particular are uniformly distributed over the periphery, extend essentially axially and parallel to the push-in axis (36) and are elastic in the radial direction, the latching arm or each latching arm (58), by means of at least one latching lug (60), engaging in a positive-locking manner behind a step surface (62) of the part (50) of the unit, in which case the pipe line (6) can be pushed through the locating opening (4) into the latching-arm region in such a way that a radial releasing movement of the latching arms/arm (58) is ruled out due to the latching arms/arm (58) bearing against the pipe line (6).

3. Connecting device according to Claim 2, characterized in that the push-in section (54) has four latching arms (58), between which axial slots (66) are formed in each case.

4. Connecting device according to Claim 2 or 3, characterized in that the latching arms (58), in their free end region, have inner supporting webs (68) as a push-in limit for the pipe line (6).

5. Connecting device according to one of Claims 1 to 4, characterized in that the insert part (22) is connected to the base part (20) via a snap-action positive-locking connection (24).

6. Connecting device according to one of Claims 1 to 5, characterized in that the insert part consists of a centring ring (28), which can be pushed into a widened portion (26) of the locating opening (4) of the base part (20) and preferably has an internal taper (14), and of at least two elastic latching arms (30), which in particular are uniformly distributed over the periphery, each latching arm (30) engaging by means of a latching lug (32) in a latching opening (34) of the base part (20).

7. Connecting device according to Claim 6, characterized in that each latching arm (30) has an actuating section (40) projecting from the base part (20).

8. Connecting device according to one of Claims 1 to 7, characterized in that the insert part (22) has an inner, encircling sealing lip (42) for bearing on the outer peripheral surface of the pipe line (6) in a sealing manner.

9. Connecting device according to one of Claims 1 to 8, characterized in that, on that side of the retaining element which is remote from the insert part (22), this retaining element preferably being designed as a slotted, radially elastic clamping ring (8) interacting via an external taper (12) with the internal taper (14) of the housing part (2), a sealing ring (44) is arranged between the retaining element and an annular step (46) of the base part (20) in such a way that the pushed-in pipe line (6), during a movement in the release direction, carries the clamping ring (8) along with it via the sealing ring (44) and moves against the internal taper (14) in order to increase the radial clamping force.

## Revendications

1. Dispositif de raccordement (1) destiné à raccorder au moins une conduite tubulaire (6) en matière plastique à une partie d'appareil (50), composé d'une partie boîtier (2) qui peut être rendue solidaire de la partie d'appareil (50) et présente au moins une ouverture réceptrice (4) destinée à l'emmanchement de la conduite tubulaire (6) et un élément de retenue (8) disposé dans l'ouverture réceptrice (4) de la partie boîtier (2) et destiné à bloquer dans la partie boîtier (2) la conduite tubulaire (6) emmanchée,
caractérisé en ce que la partie boîtier (2) présente un segment d'emmanchement (54) qui peut être emmanché à joint étanche dans une ouverture d'emmanchement (52) de la partie d'appareil (50), le segment d'emmanchement (54) étant retenu dans l'ouverture d'emmanchement (52) au moyen d'une liaison par sûreté de forme encliquetable (56) et la liaison par sûreté de forme encliquetable (56) pouvant être bloquée à l'encontre de la séparation par la conduite tubulaire (6) emmanchée dans la partie boîtier (2), cependant que, pour assurer la possibilité de séparation de la conduite tubulaire (6), la partie boîtier (2) est en deux parties, une partie de base (20) et une partie rapportée (22) reliée à celle-ci de façon séparable, et en ce que, lorsque la partie rapportée (22) a été séparée de la partie de base (20), la conduite tubulaire (6) peut être retirée de la partie boîtier (2) conjointement avec l'élément de retenue (8).

2. Dispositif de raccordement selon la revendication 1,
caractérisé en ce que le segment d'emmanchement (54) présente au moins un, de préférence au moins deux bras d'enclenchement (58) élastiques à la façon de ressorts dans la direction radiale, qui est ou sont disposés en particulier uniformément répartis sur la périphérie et qui s'étendent sensiblement axialement, parallèlement à l'axe d'emmanchement (36), le ou chaque bras d'enclenchement (58) étant engagé par sûreté de forme, par au moins une dent d'enclenchement (60), derrière une surface d'épaulement (62) de la partie d'appareil (50), la conduite tubulaire (6) pouvant être emmanchée dans la région des bras d'enclenchement au travers de l'ouverture réceptrice (4), de telle manière que l'appui du bras ou des bras d'enclenchement (58) contre la conduite tubulaire (6) exclue le mouvement radial de séparation du ou des bras d'enclenchement (58).

3. Dispositif de raccordement selon la revendication 2,
caractérisé en ce que le segment d'emmanchement (54) présente quatre bras d'enclenchement (58) entre lesquels sont formées des fentes axiales (66).

4. Dispositif de raccordement selon la revendication 2 ou 3,
caractérisé en ce que les bras d'enclenchement (58) présentent dans leur région terminale libre, des nervures d'appui (68) servant de limite d'emmanchement pour la conduite tubulaire (6).

5. Dispositif de raccordement selon une des revendications 1 à 4,
caractérisé en ce que la partie rapportée (22) est reliée à la partie de base (20) par une liaison par sûreté de forme encliquetable (24).

6. Dispositif de raccordement selon une des revendications 1 à 5,
caractérisé en ce que la partie rapportée est composée d'une bague de centrage (28) présentant de préférence un cône intérieur (14) et qui peut être emboîtée dans un élargissement (26) de l'ouverture réceptrice (4) de la partie de base (20), et d'au moins deux bras d'enclenchement (30) élastiques à la façon de ressorts, en particulier uniformément répartis sur la périphérie, chaque bras d'enclenchement (30) s'engageant par une dent d'enclenchement (32) dans une ouverture d'enclenchement (34) de la partie de base (20).

7. Dispositif de raccordement selon la revendication 6,
caractérisé en ce que chaque bras d'enclenchement (30) présente un segment d'actionnement (40) qui émerge de la partie de base (20).

8. Dispositif de raccordement selon une des revendications 1 à 7,
caractérisé en ce que la partie rapportée (22) présente une lèvre d'étanchéité inférieure périphérique (42) destinée à s'appuyer à joint étanche sur la surface périphérique extérieure de la conduite tubulaire (6).

9. Dispositif de raccordement selon une des revendications 1 à 8,
caractérisé en ce qu'il est prévu, sur le côté opposé à la partie rapportée (22) de l'élément de retenue (8) - réalisé de préférence sous la forme d'une bague de serrage (8) fendue, élastique dans la direction radiale et qui coopère par un cône extérieur (12) avec le cône intérieur (14) de la partie boîtier (2) - une bague d'étanchéité (44) disposée entre cet élément de retenue et un épaulement annulaire (46) de la partie de base (20) de telle manière que la conduite tubulaire (6) emmanchée, si elle se déplace dans le sens de la séparation (16), entraîne avec elle la bague de serrage (8), par l'intermédiaire de la bague d'étanchéité (44), pour renforcer la force de serrage radiale contre le cône intérieur (14).
